(19) **Europäisches Patentamt European Patent Office Office européen des brevets**

(11) **EP 3 330 235 B1**

(12) **EUROPEAN PATENT SPECIFICATION**

(45) Date of publication and mention of the grant of the patent:
**02.10.2024 Bulletin 2024/40**

(21) Application number: **17187970.3**

(22) Date of filing: **25.08.2017**

(51) International Patent Classification (IPC):
**C03C 17/32** (2006.01)   **C03C 21/00** (2006.01)
**B32B 17/10** (2006.01)   **B05D 3/06** (2006.01)
**B05D 3/10** (2006.01)

(52) Cooperative Patent Classification (CPC):
**C03C 17/32; B32B 17/10; C03C 17/324;**
**C03C 21/002;** B05D 3/067; B05D 3/104;
B05D 2203/35; B05D 2252/00; B05D 2701/30

(54) **FLEXIBLE GLASS ARTICLE HAVING A LOW BENDING CURVATURE AND METHOD OF MAKING THE SAME**

FLEXIBLER GLASARTIKEL MIT NIEDRIGER BIEGEKRÜMMUNG UND VERFAHREN ZUR HERSTELLUNG DAVON

ARTICLE DE VERRE FLEXIBLE AYANT UNE COURBURE DE FLEXION RÉDUITE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2016 KR 20160163702**

(43) Date of publication of application:
**06.06.2018 Bulletin 2018/23**

(73) Proprietor: **Samsung Display Co., Ltd. Gyeonggi-do 17113 (KR)**

(72) Inventors:
• **KIM, Myung-Hwan**
  **13599 Seongnam-si, Gyeonggi-do (KR)**
• **HWANG, Seongjin**
  **16620 Gyeonggi-do, Suwon-si (KR)**
• **KIM, Jiyeon**
  **21965 Incheon (KR)**
• **PARK, Ikhyung**
  **16538 Gyeonggi-do, Suwon-si (KR)**
• **YOON, Daeho**
  **05242 Seoul (KR)**
• **KIM, Kyu Young**
  **16699 Gyeonggi-do, Suwon-si (KR)**

(74) Representative: **Gulde & Partner
Patent- und Rechtsanwaltskanzlei mbB
Wallstraße 58/59
10179 Berlin (DE)**

(56) References cited:
WO-A1-2016/028542    US-A1- 2013 196 163
US-A1- 2014 132 132    US-A1- 2015 210 588
US-A1- 2016 002 103

**Description**

BACKGROUND

FIELD

The invention relates generally to flexible glass articles, more specifically, to a flexible glass article having a low bending curvature and a method of making the same.

DISCUSSION OF THE BACKGROUND

Recently there has been increased need for glass articles to be flexible for use in a variety of applications that require the glass to be flexible and bendable. For example, flexible display devices for mobile phones, tablets and other portable electronic devices include flexible glass that must be bendable or foldable without breaking. However, glass had been traditionally considered rigid in nature, and therefore alternative materials have been considered for use instead of glass. For example, flexible films made of polymer have been considered and researched for use in flexible display devices as an alternative for glass. The flexible film indeed provided necessary flexibility, but did not meet the necessary durability, resistance to scratch, chemical resistance, and optical characteristics for such applications.

Chemically strengthened glass panels also have been considered for use as flexible glass, but the chemically strengthened glass panels showed relatively large bending radii of greater than 20mm. For example, when using glass chemically strengthened to have increased surface compression, in order for the chemically strengthened glass to have a bending radius of 1 mm, the thickness of the glass would have to be about 5 $\mu$m, and to have a bending radius of 3 mm, the thickness the glass would have to be about 40 $\mu$m.

However, it is practically impossible to reduce the thickness of a glass panel to less than 25 $\mu$m using glass etching, which is conventionally used to reduce thickness of glass from between 400 $\mu$m and 700 $\mu$m to less than 100 $\mu$m, because of lack of uniformity. Examples may be found in US 2013/196163 A1, US 2016/002103 A1, WO 2016 028542 A1, US 2015/210588 A1 and US 2014/132132 A1.

The above information disclosed in this Background section is only for enhancement of understanding of the background of the inventive concepts, and, therefore, it may contain information that does not form the prior art that is already known to a person of ordinary skill in the art.

SUMMARY

The invention is defined by the appended claims. The description that follows is subjected to this limitation. Any disclosure lying outside the scope of said claims is only intended for illustrative as well as comparative purposes. Flexible glass articles constructed according to the principles of the invention and methods of making the same avoid one or more of the problems and/or drawbacks of conventional glass articles by providing an ultra-low bending curvature, while still retaining a thin profile and other favorable characteristics of glass.

Additional aspects will be set forth in the detailed description which follows, and, in part, will be apparent from the disclosure, or may be learned by practice of the inventive concepts.

According to an exemplary embodiment, a flexible glass article includes: a glass element having a first thickness of about 25 $\mu$m to about 100 $\mu$m and including first and second opposed surfaces, and a compressive stress region extending from the first surface of the glass element to a first depth in the glass element, the compressive stress region having a compressive stress of at least about 300 MPa at the first surface of the glass element; and a coating directly cured by ultraviolet radiation on the second surface of the glass element, the coating having a second thickness substantially equal to or greater than three times the first thickness, wherein the glass article is of an absence of fracture when the glass element is bent with the first surface disposed toward the inside of the bend and held at a bend radius of about 1 mm to about 10 mm for at least 60 minutes at about 25 °C and about 50 % relative humidity.

The coating included in the flexible glass article has an elastic modulus equal to or less then 10 GPa.

The glass article of the flexible glass article may further characterized by: an absence of fracture when the glass is bent over approximately 200,000 cycles.

The second thickness is equal to or less than 300 $\mu$m.

The coating may include a polymer.

The polymer may include at least one material selected from the group consisting of polyester acrylate and polyimide.

The glass article may be further characterized by: an impact resistance against a drop from a height of about 3 cm of a pen having a weight of about 5.8 g and a tip diameter of about 0.7 mm.

The glass article may be further characterized by: a change of yellow index equal to or less than about 2% after the glass article is exposed to a ultraviolet light having wavelength substantially between about 280 and about 360 nm for approximately 72 hours.

The compressive stress of the compressive stress region of the glass element may be substantially from about 300 MPa to about 1000 MPa.

The first depth may be at least about 1 $\mu$m.

The flexible glass article may have percentage haze substantially equal to or less than about 1.0 %.

The coating is formed directly on the second surface of the glass element.

A flexible display device may include the above glass article.

The glass article may be incorporated in a mobile phone, tablet, laptop, watch or other portable electronic device.

According to an exemplary embodiment, a method of manufacturing a flexible glass article includes the steps of: preparing a glass element having a first thickness and having first and second surfaces; chemically strengthening the glass element to form a compressive stress region extending from the first surface of the glass element to a first depth in the glass element, the compressive stress region having a compressive stress of at least about 300 MPa at the first surface of the glass element; and forming a coating directly on the second surface of the glass element, the coating having a second thickness substantially equal to or greater than three times the first thickness, wherein the glass article is of an absence of fracture when the glass element is bent with the first surface disposed toward the inside of the bend and held at a bend radius of about 1 mm to about 10 mm for at least 60 minutes at about 25 °C and about 50 % relative humidity.

The step of forming the coating further includes: applying a coating solution on the second surface of the glass element; applying a soft mold on the coating solution; forming the coating by exposing the glass element to ultraviolet radiation to cure the coating solution; and removing the soft mold.

The step of forming the coating may further include: exposing the coating to ultraviolet radiation after removing the soft mold.

The coating solution may include at least one material selected from the group consisting of Poly(methyl methacrylate) PMMA, Polyethylene terephthalate PET, Cellulose triacetate TAC, Polyether sulfone PES, Ethylene tetrafluoroethylene ETFE, Fluorinated ethylene propylene FEP, Perfluoroalkoxy alkane PFA, organic polymer ORGA, Polycarbonate PC , Fiber-reinforced plastic FRP, Polyurethane, Polyester, Polyaramid, Polypropylene PP, Polyethylene naphthalate PEN, and Polyimide.

The step of chemically strengthening the glass element may include: exchanging sodium ion (Na+) in the glass element with potassium ion (K+) through a Na-K ion exchange reaction.

The step of chemically strengthening the glass element may further include: submerging the glass element in potassium nitride (KNO3) bath.

Herein disclosed is a method of adjusting an effective bending radius of a glass article subject to bending stress to fold the glass article from a natural bending radius of about 2.5 mm to 10 mm to a modified bending radius of about 1 mm to 5 mm may include the steps of: providing a glass element having first and a second opposed surfaces and first thickness in the range of about 25 $\mu$m to about 100 $\mu$m; chemically strengthening the glass element to form a compressive stress region extending from the first surface of the glass element to a first depth in the glass element, and forming a coating integrally on the second surface of the glass element, the coating having a second thickness substantially equal to or greater than three times the first thickness.

The step of forming the coating may include: applying a coating solution on the second surface of the glass element; applying a soft mold on the coating solution; forming the coating by exposing the glass element to ultraviolet radiation to cure the coating solution; and removing the soft mold.

The step of chemically strengthening the glass element may include: submerging the glass in potassium nitride (KNO3) bath; and exchanging sodium ion (Na+) in the glass element with potassium ion (K+) through Na-K ion exchange reaction.

The step of chemically strengthening the glass element may include forming the compressive stress region to have a compressive stress of at least about 300 MPa at the first surface of the glass element.

The glass article may be characterized by an absence of fracture when the glass element is bent with the first surface disposed toward the inside of the bend and held at a bend radius of about 1 mm to about 10 mm for at least 60 minutes at about 25 °C and about 50 % relative humidity.

A neutral axis of the glass article may be shifted toward the coating in response to an increase in the second thickness of the coating, wherein the neutral axis of the glass article has zero tensile when the glass article is bent.

The foregoing general description and the following detailed description are exemplary and explanatory and are intended to provide further explanation of the claimed subject matter.

BRIEF DESCRIPTION OF THE DRAWINGS

The accompanying drawings, which are included to provide a further understanding of the inventive concept, and are incorporated in and constitute a part of this specification, illustrate exemplary embodiments of the inventive concept, and, together with the description, serve to explain principles of the inventive concept.

FIG. 1 is schematic side view of an exemplary embodiment of a flexible glass article constructed according to the principles of the invention.

FIG. 2A is a graph illustrating the three different speeds of crack velocity of glass articles.

FIG. 2B is a schematic side view illustrating bending of a conventional glass article.

FIG. 3 is a schematic side view illustrating bending of a flexible glass article according to the exemplary embodiments.

FIG. 4A is a schematic sectional view illustrating modification of a neutral axis of a flexible glass article according to the principles of the invention.

FIG. 4B is schematic sectional view illustrating the modified neutral axis of a flexible glass article according to the exemplary embodiments.

FIG. 5 is a flowchart illustrating an exemplary method of manufacturing the glass article according to the principles of the invention.

FIG. 6 is a graph illustrating the relationship between the glass thickness and the minimum bending radius according to the exemplary embodiments in contrast with conventional chemically strengthened glass.

FIGS. 7A, 7B, and 7C a schematic side views illustrating exemplary methods of making the flexible glass article according to the exemplary embodiments.

DETAILED DESCRIPTION OF THE ILLUSTRATED EMBODIMENTS

In the following description, for the purposes of explanation, numerous specific details are set forth in order to provide a thorough understanding of various exemplary embodiments. It is apparent, however, that various exemplary embodiments may be practiced without these specific details or with one or more equivalent arrangements. In other instances, well-known structures and devices are shown in block diagram form in order to avoid unnecessarily obscuring various exemplary embodiments.

In the accompanying figures, the size and relative sizes of layers, films, panels, regions, etc., may be exaggerated for clarity and descriptive purposes. Also, like reference numerals denote like elements.

When an element or layer is referred to as being "on," "connected to," or "coupled to" another element or layer, it may be directly on, connected to, or coupled to the other element or layer or intervening elements or layers may be present. When, however, an element or layer is referred to as being "directly on," "directly connected to," or "directly coupled to" another element or layer, there are no intervening elements or layers present. For the purposes of this disclosure, "at least one of X, Y, and Z" and "at least one selected from the group consisting of X, Y, and Z" may be construed as X only, Y only, Z only, or any combination of two or more of X, Y, and Z, such as, for instance, XYZ, XYY, YZ, and ZZ. Like numbers refer to like elements throughout. As used herein, the term "and/or" includes any and all combinations of one or more of the associated listed items.

Although the terms first, second, etc. may be used herein to describe various elements, components, regions, layers, and/or sections, these elements, components, regions, layers, and/or sections should not be limited by these terms. These terms are used to distinguish one element, component, region, layer, and/or section from another element, component, region, layer, and/or section. Thus, a first element, component, region, layer, and/or section discussed below could be termed a second element, component, region, layer, and/or section without departing from the teachings of the present disclosure.

Spatially relative terms, such as "beneath," "below," "lower," "above," "upper," and the like, may be used herein for descriptive purposes, and, thereby, to describe one element or feature's relationship to another element(s) or feature(s) as illustrated in the drawings. Spatially relative terms are intended to encompass different orientations of an apparatus in use, operation, and/or manufacture in addition to the orientation depicted in the drawings. For example, if the apparatus in the drawings is turned over, elements described as "below" or "beneath" other elements or features would then be oriented "above" the other elements or features. Thus, the exemplary term "below" can encompass both an orientation of above and below. Furthermore, the apparatus may be otherwise oriented (e.g., rotated 90 degrees or at other orientations), and, as such, the spatially relative descriptors used herein interpreted accordingly.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof.

Various exemplary embodiments are described herein with reference to sectional illustrations that are schematic illustrations of idealized exemplary embodiments and/or intermediate structures. As such, variations from the shapes of the illustrations as a result, for example, of manufacturing techniques and/or tolerances, are to be expected. Thus, exemplary embodiments disclosed herein should not be construed as limited to the particular illustrated shapes of regions, but are to include deviations in shapes that result from, for instance, manufacturing. Thus, the regions illustrated in the drawings are schematic in nature and their shapes are not intended to illustrate the actual shape of a region of a device and are not intended to be limiting.

Unless otherwise defined, all terms (including technical and scientific terms) used herein have the same meaning as commonly understood by one of ordinary skill in the art to which this disclosure is a part. Terms, such as those defined in commonly used dictionaries, should be interpreted as having a meaning that is consistent with their meaning in the context of the relevant art and will not be interpreted in an idealized or overly formal sense, unless expressly so defined herein.

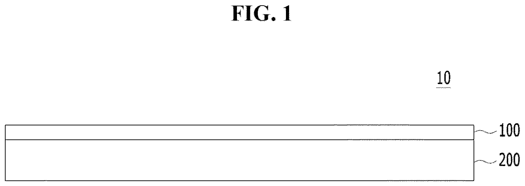

FIG. 1 is schematic side view of an exemplary embodiment of a flexible glass article 10 constructed according to the principles of the invention. Referring to FIG. 1, the flexible glass article 10 comprises a glass element 100 and a coating 200. The glass element 100 may be a flexible glass, and the coating 200 may be provided to control a characteristic of the glass element 100 and the flexible glass article 10. The coating 200 may include a polymer that has an optical characteristic adequate for use as a window, and may be formed on the glass element 100. For example, the coating 200 may include at least one of polyester acrylate and polyimide. Contrary to conventional glass, the coating is thicker than the glass itself for reasons that will be discussed herein.

The glass element 100, under conditions of static bent status or dynamic bending status, follows fracture mechanics of brittle material. Similar to other brittle materials, glass shows greater fracture toughness against compressive stress than tensile stress, and failure generally occurs when tensile stress is applied to the glass. Following are descriptions of the two circumstances glass fails under stress.

First is failure directly from an application of stress. The glass will break in response to the application of the stress when the stress intensity factor ($K_I$), which represents the stress applied to flaws embedded within the glass, is greater than the fracture toughness ($K_{IC}$), which may be between 0.65 MPa·m$^{0.5}$ and 0.82 MPa·m$^{0.5}$ for glass, from cracks propagating in a very high speed. Such failure occurs according to the following formula (1):

$$K_I = Y\sigma\sqrt{\pi a} \qquad\qquad \text{Formula (1)}$$

Wherein $K_I$ is the stress intensity factor, Y is a geometry factor of the flaw, $\sigma$ is the applied stress, and a stands for the size of the flaw.

On the other hand, a fatigue fracture of the glass under static stress occurs differently. Under static stress, sizes of the flaws embedded in the glass slowly grow according to environmental factors, such as relative humidity, resulting in propagation of cracks and the failure of the glass. The speed of the flaw size growth is proportional to the stress intensity factor and the relative humidity.

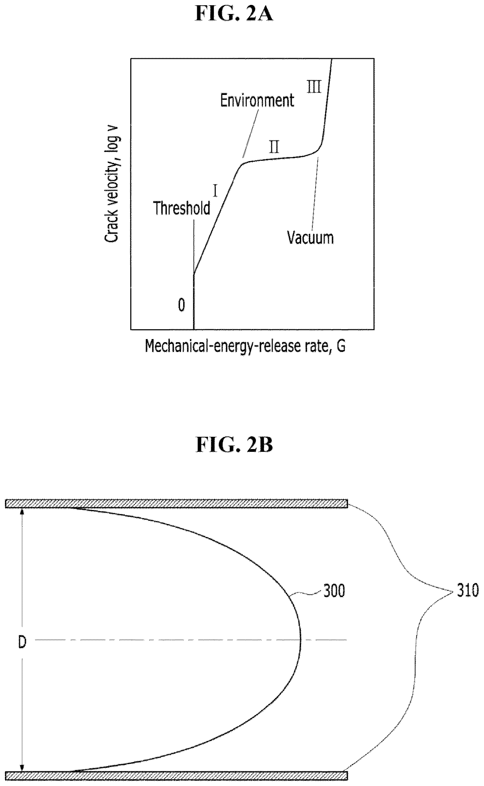

FIG. 2A is a graph illustrating the three different speeds of crack velocity of glass articles. Referring to FIG. 2A, The crack grows slowly in response to the stress intensity factor and the relative humidity in I region resulting in fatigue fracture, and the crack grows rapidly in response to stress intensity in III region, where the environmental factors are excluded, resulting in fracture or breakage of the glass. The fatigue fracture in the I region may be quantized by a slow crack growth rate, which is the incline of the graph in the I region represented as following formula (2).

$$v = v_0 \left( K_I / K_{Ic} \right)^n \qquad\qquad \text{Formula (2)}$$

Wherein v is the crack velocity, $v_0$ is an initial crack velocity, and n is the slow crack growth rate.

The most important factor in deciding whether the crack may grow is a threshold stress intensity factor ($K_{th}$), which may be between 0.2~0.27 MPa·m$^{0.5}$, corresponding to the 0 region of the graph of FIG. 2A. When the stress intensity factor $K_I$ is substantially equal to or less than the threshold stress intensity factor $K_{th}$, the crack does not grow, and therefore, the glass does not fail under the static application of stress. In other words, when the glass in bent status has the stress intensity factor $K_I$ substantially equal to or less than the threshold stress intensity factor $K_{th}$, the slow crack growth in the glass may be reduced or prevented.

According to the formulas (1) and (2), the following two different approach may be taken to reduce or prevent the failure of glass in bent status under static and/or dynamic stress: 1) a flawless processing to reduce the size of the flaw imbedded in the glass generated during cutting, chamfering, and treating of the glass; and 2) maintaining the stress intensity under the condition that the fracture or breakage and/or fatigue fracture may not occur by the bending of the glass.

FIG. 2B is a schematic side view illustrating bending of a conventional glass article 300. When the glass element is bent, the glass element is deformed in a parabolic shape as illustrated in FIG. 2B, and the applied tensile stress is greatest at the vertex of the parabolic shape, according to the following formula (3).

$$\sigma = 1.19814 \times \frac{E}{1-v^2} \times \frac{t}{D-t}$$

Formula (3)

Wherein $\sigma$ is the tensile stress, E is Young's Modulus, t is the thickness of the glass, $\upsilon$ is the Poisson rate, and D is the distance between the 2 Point Bending (2PB) plates 310.

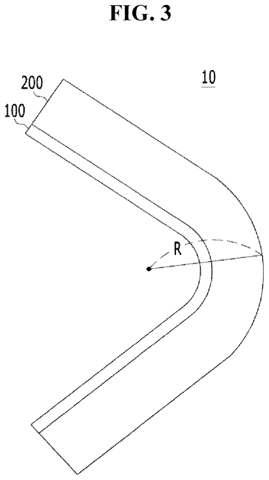

FIG. 3 is a schematic side view illustrating bending of the flexible glass article 10 according to the exemplary embodiments. The glass element 100 may be chemically strengthened by exchanging sodium ion (Na+) in the glass element with potassium ion (K+) through a Na-K ion exchange reaction. By exchanging the potassium ion (K+) which has relatively bigger size that that of the sodium ion (Na+), the surface compressive stress may be increased in the surface of the glass element. A compressive stress region may be referred to the surface region of the glass element that has the increased compressive stress.

The increased compressive stress formed in the compressive stress region may reduce the actual tensile stress applied at the vertex of the parabolic shape according to following formula (4), and therefore, the formula (1) may be rewritten to formula (5):

$$\sigma_{actual} = \sigma_a - CS_{flaw}$$

Formula (4)

$$K_I = Y(\sigma_a - CS_{flaw})\sqrt{\pi \times a}$$

Formula (5)

Wherein $\sigma_{actual}$ is the actual tensile stress, $\sigma_a$ is the applied stress, and $CS_{flaw}$ is compressive stress applied at the flaw.

First, an example of the chemically strengthened glass is described when used without the coating 200. To make the chemically strengthened glass having a thickness of 50 $\mu$m, and Young's Modulus of 69.3 GPa to have a bend radius of 3 mm (R3), considering a module layer thickness of 300 $\mu$m, the chemically strengthened glass needs to be bent until the distance between the 2PB plates 310 is 5.4 mm. According to the formula (3), the applied tensile stress may be 776 MPa. If the glass is chemically strengthened to have the surface compressive stress of 850 MPa, a depth of the compressive stress region (DOL) of 10 $\mu$m, in order to prevent the fracture or breakage and/or fatigue fracture, the size of the flaw must be maintained between about 17 nm and 1.7 $\mu$m. However, it is practically impossible to use a conventional chemical flaw healing method to control the size of the flaw under 1 $\mu$m.

Referring to FIGS 1 and 3, the glass article 10 according to the exemplary embodiments includes the coating 200 formed on the glass element 100. The coating 200 may have a thickness between about 10 $\mu$m and about 300 $\mu$m. Exemplary processes for making and applying the coating 200 are discussed subsequently.

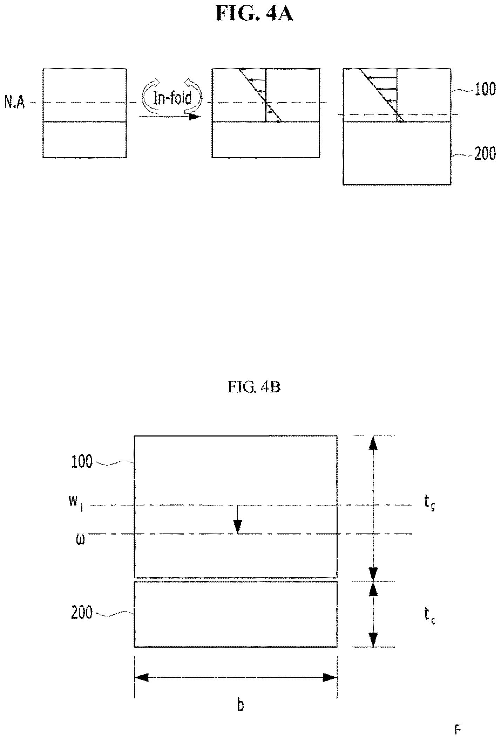

FIG. 4A is a schematic sectional view illustrating modification of a neutral axis NA of the flexible glass article 10 according to the principles of the invention. The neutral axis NA refers to an axis of the glass article which has zero tensile when the glass article is bent. FIG. 4B is schematic sectional view illustrating the modified neutral axis $\overline{\omega}$ of the flexible glass article 10 according to the exemplary embodiments.

Referring to FIG, 4A, in response to the thickness and the Young's modulus of the coating 200, the neutral axis NA of the glass article 10 is modified to be shifted toward the coating 200. Accordingly, when the glass element is bent with the first surface disposed toward the inside of the bend, the region of the glass element 100 that tensile stress is applied may be reduced, and the effective bending radius may be further reduced.

Referring to FIG. 4B, the modified neutral axis $\overline{\omega}$ of the glass article 10 may be calculated according to the following formula (6):

$$\varpi = \frac{\sum w_i E_i A_i}{\sum E_i A_i} = \frac{(t_c + t_g/2) \times E_g \times b \times t_g + t_c/2 \times E_c \times b \times t_c}{E_c \times b \times t_c + E_g \times b \times t_g}$$

Formula (6)

wherein m is the modified neutral axis of the glass article, $w_i$ is the neutral axis of the glass element, $t_c$ is the thickness of the coating 200, $t_g$ is the thickness of the glass element 100, b is a width of the glass article 10, $E_c$ is the Young's modulus of the coating 200, and $E_g$ is the Young's modulus of the glass element 100.

According to the formula (6), an exemplary coating having a Young's modulus of 2 GPa and 5 GPa and a thickness between about 10 $\mu$m and about 300 $\mu$m formed onto the glass element 100 having a thickness between

about 20 μm and about 40 μm. Since the thickness of the coating is inversely proportional to an effective thickness, the bending radius may be reduced as the thickness of the coating 200 is increased. Following Table 1 shows the effective thickness of the glass article 10 based upon the thickness of the coating 200 and the thickness of the glass element 100:

| $t_g$ / $t_c$ | $E_c = 2$ GPa | | | $E_c = 5$ GPa | | |
|---|---|---|---|---|---|---|
| | 40 μm | 30 μm | 20 μm | 40 μm | 30 μm | 20 μm |
| 10 μm | 39.81 μm | 29.81 μm | 19.81 μm | 39.53 μm | 29.53 μm | 19.48 μm |
| 30 μm | 39.16 μm | 29.16 μm | 19.16 μm | 37.98 μm | 27.98 μm | 17.56 μm |
| 50 μm | 38.16 μm | 28.16 μm | 18.16 μm | 35.71 μm | 25.71 μm | 14.65 μm |
| 100 μm | 34.30 μm | 24.30 μm | 12.43 μm | 27.40 μm | 17.40 μm | 4.09 μm |
| 150 μm | 25.94 μm | 15.94 μm | 4.86 μm | 16.14 μm | 6.14 μm | – |

< Table 1 > effective thickness of the glass article 10 based upon the thickness of the coating 200

Accordingly, following Table 2 shows the thickness of the coating 200 necessary to make the effective thickness of the glass article 10 to be about 5 μm:

< Table 2 > necessary thickness of the coating 200 to make the effective thickness of the glass article 10 to be about 5 μm, and the corresponding effective thickness of the glass article 10

| | $E_c = 2$ GPa | | | $E_c = 5$ GPa | | |
|---|---|---|---|---|---|---|
| | 40 μm | 30 μm | 20 μm | 40 μm | 30 μm | 20 μm |
| $t_c$ | 330 μm | 240 μm | 150 μm | 215 μm | 155 μm | 100 μm |
| effective thickness | 4.42 μm | 4.68 μm | 4.86 μm | 4.37 μm | 4.88 μm | 4.09 μm |

Particularly, the glass article 10 having the glass element 100 with a thickness of 30 μm and the coating 200 having a Young's modulus of 5 GPa and a thickness of 155 μm, when bent, may have the effective thickness of 4.88 μm. Thus, the glass article 10 may have the same bending characteristics as the glass having a thickness of 5 μm, which may have a bending radius of 1 mm, and therefore, the glass article 10 may have the effective bending radius of 1 mm (R1).

Referring to FIGS. 4A and 4B, in order to modify the neutral axis NA from the neutral axis of the glass element $w_i$ to the modified neutral axis of the glass article $\overline{\omega}$, the coating 200 is formed directly on the glass element 100 without intervening adhesive. According to an exemplary embodiment, the coating 200 may be formed integrally with the glass element 100.

For example, forming the coating 200 directly onto the glass element 100 may include following steps:
First, while FIGS. 4A and 4B illustrate that the glass article 10 includes only one layer of coating 200, the exemplary embodiments are not necessarily limited thereto. The glass article 10 may include multiple layers of one or more different types of coatings formed on the glass element. Each of the coatings 200 may include a polymer that has an optical characteristic adequate for use as a window, and may be formed on the glass element 100. For example, each of the multiple layers of the coating may include at least one of polyester acrylate and polyimide, and may include different materials in each of the multiple layers.

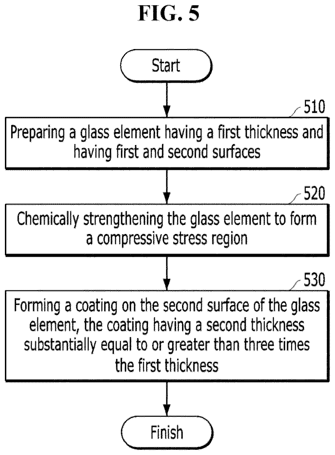

FIG. 5 is a flowchart illustrating an exemplary method of manufacturing the glass article according to the principles of the invention. First, a glass element having a first thickness and having first and second surfaces is prepared 510.

The glass element may be chemically strengthening to form a compressive stress region extending from the first surface of the glass element to a first depth in the glass element, with the compressive stress region preferably having a compressive stress of at least about 300 MPa at the first surface of the glass element 520. Various methods may be used to chemically strengthen the glass element. For example, the glass element may be chemically strengthened by exchanging sodium ions (Na+) in the glass element with potassium ions (K+) through a Na-K ion exchange reaction. By exchanging the potassium ions (K+), which has relatively bigger size that that of the sodium ion (Na+), the surface compressive stress may be increased in the surface of the glass element. For example, the Na-K ion exchange reaction may be performed by submerged the glass element in potassium nitride ($KNO_3$) bath.

After the glass element is chemically strengthened, a coating may be formed on the second surface of the glass element, wherein the coating preferably has a second thickness substantially equal to or greater than three times the first thickness 530. Various methods may be used to form the coating directly on the glass element. Forming the coating directly on the glass element includes: applying a coating solution on the second surface of the glass element; applying a soft mold on the coating solution; forming the coating by exposing the glass element to ultraviolet radiation to cure the coating solution; and removing the soft mold. The coating 200 becomes a part of the glass article, and therefore, the coating 200 has relatively high optical transmittance and resistance to heat. Also, the material is cured by ultraviolet radiation, but the material should not turn yellow by ultraviolet radiation and should not have haze when cured.

For example, the coating solution may include at least one of Poly(methyl methacrylate) PMMA, Polyethylene terephthalate PET, Cellulose triacetate TAC, Polyether sulfone PES, Ethylene tetrafluoroethylene ETFE, Fluorinated ethylene propylene FEP, Perfluoroalkoxy alkane PFA, organic polymer ORGA, Polycarbonate PC , Fiber-reinforced plastic FRP, Polyurethane, Polyester, Polyaramid, Polypropylene PP, Polyethylene naphthalate PEN, and Polyimide.

Furthermore, the coating may be exposed to ultraviolet radiation again after removing the soft mold to further cure the coating 200.

Referring to FIG. 5, only one layer of the coating is formed, but the exemplary embodiments are not limited thereto. As noted above, multiple layers of coatings may be formed on the glass element. The method of forming the coatings may be repeated to form the multiple layers of the coating. Each of the coatings 200 may include a polymer that has an optical characteristic adequate for use as a window, and may be formed on the glass element 100. For example, each of the multiple layers of the coating may include at least one of polyester acrylate and polyimide, and may include different materials in each of the multiple layers.

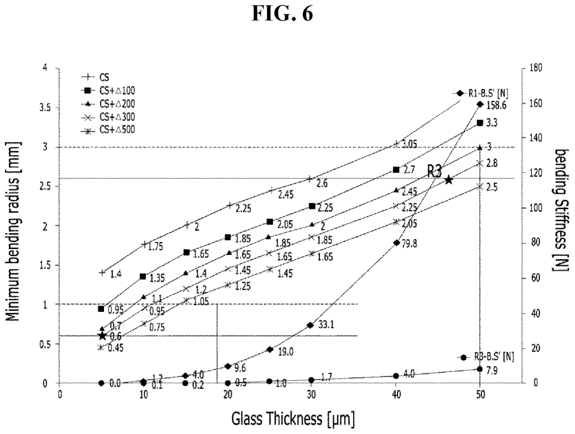

FIG. 6 is a graph illustrating the relationship between the glass thickness and the minimum bending radius according to the exemplary embodiments in contrast with conventional chemically strengthened glass.

Referring to FIG. 6, in order to individually use the chemically strengthened glass having increased surface compressive stress to form a R1 glass article, which has a bending radius of 1mm, the individual chemically strengthened glass needs to have a thickness of 5 μm. Even to form a R3 glass window, which has a bending radius of 3mm, the individual chemically strengthened glass needs to have a thickness of 40 μm. However, it is practically impossible to reduce the thickness of a glass panel to less than 25 μm using glass etching, which is conventionally used to reduce thickness of glass from between 400 μm and 700 μm to less than 100 μm, because of lack of uniformity.

On the other hand, the glass article 10 according to the exemplary embodiments having the glass element 100 with greater thickness may have relatively small bending radius. Following Table 3 is the calculation of the effective thickness of the glass article 10 including the glass element 100 having a thickness of about 25 μm, based upon the thickness and the Young's modulus of the coating 200, according to the exemplary embodiments.

< Table 3 > the effective thickness of the glass article 10

| thickness of the coating 200 | 1 GPa | 6 GPa | 10 GPa |
|---|---|---|---|
| 10 | 24.79914 | 23.82845 | 23.09004 |
| 20 | 24.48645 | 22.08502 | 20.34282 |
| 30 | 24.06383 | 19.82353 | 16.88192 |
| 40 | 23.53315 | 17.09125 | 12.80774 |
| 50 | 22.89621 | 13.92989 | 8.202688 |
| 60 | 22.15481 | 10.37634 | 3.135048 |
| 70 | 21.31068 | 6.463415 | -2.33813 |
| 80 | 20.36552 | 2.220339 | |
| 90 | 19.32099 | -2.32673 | |
| 100 | 18.17872 | | |
| 110 | 16.94030 | | |

(continued)

| thickness of the coating 200 | 1 GPa | 6 GPa | 10 GPa |
|---|---|---|---|
| 120 | 15.60729 | | |
| 130 | 14.18121 | | |
| 140 | 12.66355 | | |
| 150 | 11.05578 | | |
| 160 | 9.359313 | | |
| 170 | 7.575558 | | |
| 180 | 5.705882 | | |
| 190 | 3.751625 | | |
| 200 | 1.714101 | | |
| 210 | -0.40541 | | |

According to the Table 3, the neutral axis of the glass article 10 may be shifted into the coating 200, and therefore, 0 tensile stress may be applied to the glass article 10 when the glass article 10 is bent with the first surface of the glass article 10 disposed toward the inside of the bend. For example, to shift the neutral axis of the glass article 10 into the coating 200, the coating 200 having a Young's modulus of about 1 GPa may have a thickness of at least 8.4 times the thickness of the glass element 100 (=210/25), and the coating 200 having a Young's modulus of about 10 GPa may have a thickness of at least 2.8 times the thickness of the glass element 100 (=70/25). More particularly, the coating 200 including polyimide, which has relatively large Young's modulus of about 6 GPa, may have a thickness of 3.6 times the thickness of the glass element 100.

Therefore, the coating 200 may have a thickness of at least 3 times the thickness of glass element 100. Following Table 4 shows various test results comparing (a) conventional chemically strengthened glass element used individually and (b) the glass article according to the exemplary embodiments. Both the conventional chemically strengthened glass element and the chemically strengthened glass element 100 included in the glass article 10 have a thickness of 30 μm, and a compressive stress region having a compressive strength of about 600 MPa and the depth (DOL) of about 6 μm. The glass article according to the exemplary embodiments may include a coating 200 having a thickness of 240 μm and a Young's modulus of about 2.0 GPa.

< Table 4 > various test result comparing (a) conventional chemically strengthened glass element used individually and (b) the glass article according to the exemplary embodiments

| | Chemically strengthened glass element used individually | Chemically strengthened glass element + coating |
|---|---|---|
| Dynamic bending test (1 mm, 200K) | Break at the 1st bending | Pass |
| Static bending test (1 mm, 60 minutes) | N/A | Pass |
| Optical characteristic | | |
| • Transmittance | > 90% | > 90% |
| • Reflection rate | < 8% | < 8% |
| • Yellow index (YI) | < 1% | < 1% |
| • ΔYI after 72hr UV radiation (280~360nm) | < 2% | < 2% |
| Shock resistance test | Break at 1cm drop | Break at 3cm drop |

According to the test results, the individual glass element failed to pass the 1 mm bending test at the first bending. On the other hand, the glass article according to the exemplary embodiments passed the 200K dynamic bending test and the static bending test of 600 minutes. Both the individual glass element and the glass article according to the exemplary embodiments have substantially the same optical characteristics.

The shock resistance test may be performed by dropping pen on to test subject. The test subject may be attached to a base film using a pressure sensitive adhesive having a thickness of 50 μm and Young's modulus of about 1 MPa. The base film may be attached to a steel plate. The base film may include Polyethylene terephthalate PET having a thickness of 50 μm. The pen used in the test is BIC® ORANGE™ FINE pen, having a point diameter of 0.7 mm and weight of 5.8 g. The drop test is performed by increasing the drop height by 1 cm after the test subject passes the test until the test subject fails. According to the test results, the individual glass element broke at a 1cm drop, and the glass article according to the exemplary embodiment broke at a 3 cm drop.

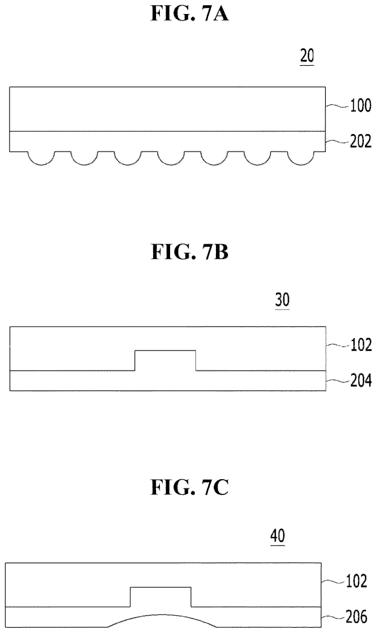

FIGS. 7A, 7B, and 7C a schematic side views illustrating exemplary embodiments of the flexible glass article according to the exemplary embodiments.

Referring to FIG. 7A, the glass article 20 may include the glass element 100 and the coating 202. The glass elements 100 and the coating 202 of the glass article 20 may be formed of materials substantially same as the glass element 100 and the coating 200 of the glass article 10 illustrated in FIGS. 1, 3, 4A, and 4B. The lower surface of the coating 202 may have patterns. The patterns formed on the lower surface of the coating 202 may be formed by including corresponding patterns in the soft mold, which is applied onto the coating solution during the step of forming the coating.

Referring to FIG. 7B, the glass article 30 may include the glass element 102 and the coating 204. The glass elements 102 and the coating 204 of the glass article 20 may be formed of materials substantially same as the glass element 100 and the coating 200 of the glass article 10 illustrated in FIGS. 1, 3, 4A, and 4B. The glass element 102 may be partially slimmed by including slimming patterns in the second surface of the glass element 102. The coating 204 may be formed to fill the slimming patterns of the glass element 102. The lower surface of the coating 204 may be flat.

Referring to FIG. 7C, the glass article 40 may include the glass element 102 and the coating 206. The glass elements 102 and the coating 206 of the glass article 20 may be formed of materials substantially same as the glass element 100 and the coating 200 of the glass article 10 illustrated in FIGS. 1, 3, 4A, and 4B. The glass element 102 may be substantially the same as the glass article 30 of FIG. 7B. The coating 206 may be formed to fill the slimming patterns of the glass element 102. The lower surface of the coating 206 may be flat. The coating 206 may also have slimming pattern corresponding to the slimming patterns of the glass element 102. The slimming patterns formed on the lower surface of the coating 206 may be formed by including corresponding pattern in the soft mold, which is applied onto the coating solution during forming the coating.

It is clear for a person skilled in the art that the disclosed embodiments can also be combined where possible.

**Claims**

**1.** A flexible glass article, comprising:

a glass element (100) having a first thickness of 25 μm to 100 μm and including first and second opposed surfaces, and a compressive stress region extending from the first surface of the glass element (100) to a first depth in the glass element, the compressive stress region having a compressive stress of at least 300 MPa at the first surface of the glass element (100); and
a coating (200) directly cured by ultraviolet radiation on the second surface of the glass element, wherein the glass article is of an absence of fracture when the glass element (100) is bent with the first surface disposed toward the inside of the bend and held at a bend radius of 1 mm to 10 mm for at least 60 minutes at 25 °C and 50 % relative humidity,
**characterized in that** the coating (200) has a second thickness equal to or greater than three times the first thickness and the second thickness is equal to or less than 300 μm, and that the coating (200) has an elastic modulus equal to or less than 10 GPa.

**2.** The flexible glass article of claim 1, wherein the glass article is further **characterized by** an absence of fracture when the glass is bent over 200,000 cycles.

**3.** The flexible glass article of claim 1, wherein the coating (200) comprises a polymer.

**4.** The flexible glass article of claim 3, wherein the polymer comprises at least one material selected from the group consisting of polyester acrylate and polyimide.

**5.** The flexible glass article of claim 1, wherein the glass article is further **characterized by** an impact resistance against a drop from a height of 3 cm of a pen having a weight of 5.8 g and a tip diameter of 0.7 mm, or
wherein the glass article is further **characterized by** a change of yellow index equal to or less than 2% after the glass article is exposed to a ultraviolet light having wavelength between 280 and 360 nm for 72 hours.

6. The flexible glass article of claim 1, wherein the compressive stress of the compressive stress region of the glass element (100) is from 300 MPa to 1000 MPa.

7. The flexible glass article of claim 6, wherein the first depth is at least 1 $\mu$m.

8. The flexible glass article of claim 1, wherein the flexible glass article has percentage haze equal to or less than 1.0 %.

9. A flexible display device comprising the glass article of one of the preceding claims.

10. Use of the flexible glass article of one of the preceding claims for a mobile phone, tablet, laptop, watch or other portable electronic device.

11. A method of manufacturing a flexible glass article of one of the preceding claims, the method comprising the steps of:

preparing a glass element (100) having a first thickness and having first and second surfaces;
chemically strengthening the glass element (100) to form a compressive stress region extending from the first surface of the glass element (100) to a first depth in the glass element, the compressive stress region having a compressive stress of at least 300 MPa at the first surface of the glass element; and
forming a coating (200) directly on the second surface of the glass element,
wherein the glass article is of
an absence of fracture when the glass element (100) is bent with the first surface disposed toward the inside of the bend and held at a bend radius of 1 mm to 10 mm for at least 60 minutes at 25 °C and 50 % relative humidity, **characterized in that** the coating (200) having a second thickness equal to or greater than three times the first thickness and the second thickness is equal to or less than 300 $\mu$m, and that the coating (200) has an elastic modulus equal to or less than 10 GPa,

wherein the step of forming the coating (200) comprises:

applying a coating solution on the second surface of the glass element (100);
applying a soft mold on the coating solution;
forming the coating (200) by exposing the glass element (100) to ultraviolet radiation to cure the coating solution; and
removing the soft mold.

12. The method of claim 11, wherein the step of forming the coating (200) further comprises:
exposing the coating (200) to ultraviolet radiation after removing the soft mold.

13. The method of claim 11, wherein the coating solution comprises at least one material selected from the group consisting of Poly(methyl methacrylate) PMMA, Polyethylene terephthalate PET, Cellulose triacetate TAC, Polyether sulfone PES, Ethylene tetrafluoroethylene ETFE, Fluorinated ethylene propylene FEP, Perfluoroalkoxy alkane PFA, organic polymer, Polycarbonate PC , Fiber-reinforced plastic FRP, Polyurethane, Polyester, Polyaramid, Polypropylene PP, Polyethylene naphthalate PEN, and Polyimide.

14. The method of claim 11, wherein the step of chemically strengthening the glass element (100) comprises:
exchanging sodium ion (Na+) in the glass element (100) with potassium ion (K+) through a Na-K ion exchange reaction.

15. The method of claim 14, wherein the step of chemically strengthening the glass element (100) further comprises:
submerging the glass element in potassium nitrate ($KNO_3$) bath.

**Patentansprüche**

1. Flexibler Glasartikel, umfassend:

ein Glaselement (100) mit einer ersten Dicke von 25 $\mu$m bis 100 $\mu$m und umfassend eine erste und zweite gegenüberliegende Oberfläche und eine Druckspannungszone, die sich von der ersten Oberfläche des Glaselementes (100) zu einer ersten Tiefe in dem Glaselement erstreckt, wobei die Druckspannungszone eine Druckspannung von mindestens 300 MPa auf der ersten Oberfläche des Glaselementes (100) aufweist; und eine Beschichtung (200), gehärtet durch UV-Strahlung direkt auf der zweiten Oberfläche des Glaselementes, wobei der Glasartikel bruchfrei ist, wenn das Glaselement (100) gebogen wird, wobei die erste Oberfläche in Richtung der Innenseite der Biegung angeordnet ist, und in einem Biegeradius von 1 mm bis 10 mm über mindestens 60 Minuten bei 25 °C und 50 % relativer Feuchte gehalten wird,

**dadurch gekennzeichnet, dass** die Beschichtung (200) eine zweite Dicke, die gleich dem Dreifachen der ersten Dicke oder größer als das Dreifache der ersten Dicke ist, aufweist und die zweite Dicke gleich oder kleiner als 300 $\mu$m ist, und dass die Beschichtung (200) einen Elastizitätsmodul gleich oder kleiner als 10 GPa aufweist.

2. Flexibler Glasartikel nach Anspruch 1, wobei der Glasartikel weiterhin **gekennzeichnet ist durch** Bruchfreiheit, wenn das Glas über 200 000 Zyklen gebogen wird.

3. Flexibler Glasartikel nach Anspruch 1, wobei die Beschichtung (200) ein Polymer umfasst.

4. Flexibler Glasartikel nach Anspruch 3, wobei das Polymer mindestens ein Material, ausgewählt aus der Gruppe bestehend aus Polyesteracrylat und Polyimid, umfasst.

5. Flexibler Glasartikel nach Anspruch 1, wobei der Glasartikel weiterhin **gekennzeichnet ist durch** Schlagfestigkeit gegen einen Fall eines Kugelschreibers mit einem Gewicht von 5,8 g und einem Durchmesser der Spitze von 0,7 mm aus einer Höhe von 3 cm, oder wobei der Glasartikel weiterhin **gekennzeichnet ist durch** eine Veränderung des Gelbindex gleich oder kleiner als 2 %, nachdem der Glasartikel einem UV-Licht mit einer Wellenlänge zwischen 280 nm und 360 nm über 72 Stunden ausgesetzt wird.

6. Flexibler Glasartikel nach Anspruch 1, wobei die Druckspannung der Druckspannungszone des Glaselementes (100) von 300 MPa bis 1000 MPa beträgt.

7. Flexibler Glasartikel nach Anspruch 6, wobei die erste Tiefe mindestens 1 $\mu$m beträgt.

8. Flexibler Glasartikel nach Anspruch 1, wobei der flexible Glasartikel eine prozentuale Trübung gleich oder kleiner als 1,0 % aufweist.

9. Flexible Anzeigevorrichtung, umfassend den Glasartikel nach einem der vorangehenden Ansprüche.

10. Verwendung des flexiblen Glasartikels nach einem der vorangehenden Ansprüche für ein Mobiltelefon, ein Tablet, einen Laptop, eine Armbanduhr oder eine andere tragbare elektronische Vorrichtung.

11. Verfahren zur Herstellung eines flexiblen Glasartikels nach einem der vorangehenden Ansprüche, wobei das Verfahren die folgenden Schritte umfasst:

Herstellen eines Glaselementes (100) mit einer ersten Dicke und mit einer ersten und zweiten Oberfläche; chemische Verstärkung des Glaselementes (100) zum Ausbilden einer Druckspannungszone, die sich von der ersten Oberfläche des Glaselementes (100) zu einer ersten Tiefe in dem Glaselement erstreckt, wobei die Druckspannungszone eine Druckspannung von mindestens 300 MPa auf der ersten Oberfläche des Glaselementes aufweist; und Ausbilden einer Beschichtung (200) direkt auf der zweiten Oberfläche des Glaselementes, wobei der Glasartikel bruchfrei ist, wenn das Glaselement (100) gebogen wird, wobei die erste Oberfläche in Richtung der Innenseite der Biegung angeordnet ist, und in einem Biegeradius von 1 mm bis 10 mm über mindestens 60 Minuten bei 25 °C und 50 % relativer Feuchte gehalten wird,

**dadurch gekennzeichnet, dass** die Beschichtung (200) eine zweite Dicke, die gleich dem Dreifachen der ersten Dicke oder größer als das Dreifache der ersten Dicke ist, aufweist und die zweite Dicke gleich oder kleiner als 300 $\mu$m ist, und dass die Beschichtung (200) einen Elastizitätsmodul gleich oder kleiner als 10 GPa aufweist,

wobei der Schritt des Ausbildens der Beschichtung (200) umfasst:

Aufbringen einer Beschichtungslösung auf die zweite Oberfläche des Glaselementes (100);
Aufbringen einer weichen Form auf die Beschichtungslösung;
Ausbilden der Beschichtung (200) durch Aussetzen des Glaselementes (100) UV-Strahlung, um die Beschichtungslösung zu härten; und
Entfernen der weichen Form.

12. Verfahren nach Anspruch 11, wobei der Schritt des Ausbildens der Beschichtung (200) weiterhin umfasst:
Aussetzen der Beschichtung (200) UV-Strahlung nach dem Entfernen der weichen Form.

13. Verfahren nach Anspruch 11, wobei die Beschichtungslösung mindestens ein Material, ausgewählt aus der Gruppe bestehend aus Poly(methylmethacrylat) (PMMA), Polyethylenterephthalat (PET), Cellulosetriacetat (TAC), Polyethersulfon (PES), Ethylen-Tetrafluorethylen (ETFE), fluoriertem Ethylenpropylen (FEP), Perfluoralkoxyalkan (PFA), organischem Polymer, Polycarbonat (PC), faserverstärktem Kunststoff (FRP), Polyurethan, Polyester, Polyaramid, Polypropylen (PP), Polyethylennaphthalat (PEN) und Polyimid, umfasst.

14. Verfahren nach Anspruch 11, wobei der Schritt der chemischen Verstärkung des Glaselementes (100) umfasst:
Austauschen des Natrium-Ions (Na$^+$) in dem Glaselement (100) gegen das Kalium-Ion (K$^+$) durch eine Na-K-Ionen-Austausch-Reaktion.

15. Verfahren nach Anspruch 14, wobei der Schritt der chemischen Verstärkung des Glaselementes (100) weiterhin umfasst:
Eintauchen des Glaselementes in ein Kaliumnitrat-Bad (KNO$_3$-Bad).

## Revendications

1. Article en verre flexible, comprenant :

   un élément en verre (100) ayant une première épaisseur de 25 µm à 100 µm et comportant des première et deuxième surfaces opposées, et une région de contrainte de compression s'étendant de la première surface de l'élément en verre (100) à une première profondeur dans l'élément en verre, la région de contrainte de compression ayant une contrainte de compression d'au moins 300 MPa au niveau de la première surface de l'élément en verre (100) ; et
   un revêtement (200) directement durci par rayonnement ultraviolet sur la deuxième surface de l'élément en verre, dans lequel l'article en verre présente une absence de fracture lorsque l'élément en verre (100) est courbé avec la première surface disposée vers l'intérieur de la courbure et maintenu à un rayon de courbure de 1 mm à 10 mm pendant au moins 60 minutes à 25 °C et 50 % d'humidité relative, **caractérisé en ce que** le revêtement (200) a une deuxième épaisseur égale ou supérieure à trois fois la première épaisseur et la deuxième épaisseur est égale ou inférieure à 300 µm, et que le revêtement (200) a un module d'élasticité égal ou inférieur à 10 GPa.

2. Article en verre flexible selon la revendication 1, dans lequel l'article en verre est en outre **caractérisé par** une absence de fracture lorsque le verre est courbé sur 200 000 cycles.

3. Article en verre flexible selon la revendication 1, dans lequel le revêtement (200) comprend un polymère.

4. Article en verre flexible selon la revendication 3, dans lequel le polymère comprend au moins un matériau choisi dans le groupe consistant en polyester acrylate et polyimide.

5. Article en verre flexible selon la revendication 1, dans lequel l'article en verre est en outre **caractérisé par** une résistance aux chocs contre une chute d'une hauteur de 3 cm d'un stylo ayant un poids de 5,8 g et un diamètre de pointe de 0,7 mm, ou
   dans lequel l'article en verre est en outre **caractérisé par** un changement de l'indice de jaune égal ou inférieur à 2 % après que l'article en verre a été exposé à une lumière ultraviolette ayant une longueur d'onde entre 280 et 360 nm pendant 72 heures.

6. Article en verre flexible selon la revendication 1, dans lequel la contrainte de compression de la zone de contrainte de compression de l'élément en verre (100) est de 300 MPa à 1000 MPa.

**7.** Article en verre flexible selon la revendication 6, dans lequel la première profondeur est d'au moins 1 μm.

**8.** Article en verre flexible selon la revendication 1, dans lequel l'article en verre flexible a un pourcentage de trouble égal ou inférieur à 1,0 %.

**9.** Dispositif d'affichage flexible comprenant l'article en verre de l'une des revendications précédentes.

**10.** Utilisation de l'article en verre flexible de l'une des revendications précédentes pour un téléphone mobile, une tablette, un ordinateur portable, une montre ou un autre dispositif électronique portable.

**11.** Procédé de fabrication d'un article en verre flexible de l'une des revendications précédentes, le procédé comprenant les étapes consistant à :

préparer un élément en verre (100) ayant une première épaisseur et ayant des première et deuxième surfaces ;
renforcer chimiquement l'élément en verre (100) pour former une région de contrainte de compression s'étendant de la première surface de l'élément en verre (100) à une première profondeur dans l'élément en verre, la région de contrainte de compression ayant une contrainte de compression d'au moins 300 MPa au niveau de la première surface de l'élément en verre ; et
former un revêtement (200) directement sur la deuxième surface de l'élément en verre,
dans lequel l'article en verre présente
une absence de fracture lorsque l'élément en verre (100) est courbé avec la première surface disposée vers l'intérieur de la courbure et maintenu à un rayon de courbure de 1 mm à 10 mm pendant au moins 60 minutes à 25 °C et 50 % d'humidité relative,
**caractérisé en ce que** le revêtement (200) a une deuxième épaisseur égale ou supérieure à trois fois la première épaisseur et la deuxième épaisseur est égale ou inférieure à 300 μm, et que le revêtement (200) a un module d'élasticité égal ou inférieur à 10 GPa,
dans lequel l'étape de formation du revêtement (200) comprend :

l'application d'une solution de revêtement sur la deuxième surface de l'élément en verre (100) ;
l'application d'un moule mou sur la solution de revêtement ;
la formation du revêtement (200) en exposant l'élément en verre (100) à un rayonnement ultraviolet pour durcir la solution de revêtement ; et
l'élimination du moule mou.

**12.** Procédé selon la revendication 11, dans lequel l'étape consistant à former le revêtement (200) comprend en outre : l'exposition du revêtement (200) à un rayonnement ultraviolet après l'élimination du moule mou.

**13.** Procédé selon la revendication 11, dans lequel la solution de revêtement comprend au moins un matériau choisi dans le groupe consistant en poly(méthacrylate de méthyle) PMMA, polyéthylène téréphtalate, PET, triacétate de cellulose, TAC, polyéther sulfone, PES, éthylène tétrafluoroéthylène, ETFE, éthylène propylène fluoré, FEP, perfluoroalcoxy alcane, PFA, polymère organique, polycarbonate, PC, plastique renforcé de fibres, FRP, polyuréthane, polyester, polyaramide, polypropylène, PP, polyéthylène naphtalate, PEN, et polyimide.

**14.** Procédé selon la revendication 11, dans lequel l'étape consistant à renforcer chimiquement l'élément en verre (100) comprend :
l'échange d'ions sodium (Na+) dans l'élément en verre (100) avec des ions potassium (K+) par une réaction d'échange d'ions Na-K.

**15.** Procédé selon la revendication 14, dans lequel l'étape consistant à renforcer chimiquement l'élément en verre (100) comprend en outre :
l'immersion de l'élément en verre dans un bain de nitrate de potassium ($KNO_3$).

# FIG. 1

10

100

200

## FIG. 2A

## FIG. 2B

**FIG. 3**

# FIG. 4A

N.A

In-fold

100

200

FIG. 4B

100

$w_i$

$\overline{\omega}$

$t_g$

200

$t_c$

b

F

# FIG. 5

Start

510

Preparing a glass element having a first thickness and having first and second surfaces

520

Chemically strengthening the glass element to form a compressive stress region

530

Forming a coating on the second surface of the glass element, the coating having a second thickness substantially equal to or greater than three times the first thickness

Finish

## FIG. 6

**FIG. 7A**

20

100

202

**FIG. 7B**

30

102

204

**FIG. 7C**

40

102

206

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013196163 A1
- US 2016002103 A1
- WO 2016028542 A1
- US 2015210588 A1
- US 2014132132 A1